# EUROPEAN PATENT APPLICATION

(11) **EP 4 664 876 A2**
(43) Date of publication of application: **17.12.2025**
(21) Application number: 25182148.4
(22) Date of filing: 11.06.2025
(51) Int. Cl.: H04N 7/18, G06F 3/01, G06V 20/52, G08B 13/196

(54) **VIDEO SURVEILLANCE METHOD AND SYSTEM**

(30) Priority: 13.06.2024 GB 202408445
(71) Applicant: Milestone Systems A/S, 2605 Brøndby (DK)
(72) Inventor: IOANNOU, Constantina, 2605 Brøndby (DK); JOERGENSEN, Kasper Schou, 2605 Brøndby (DK); NASROLLAHI, Kamal, 2605 Brøndby (DK); LI, Zenjie, 2605 Brøndby (DK)
(74) Representative: Canon Europe Limited

(57) **Abstract**

A video surveillance method is provided that includes: displaying one or more camera views from one or more video cameras in one or more windows on a display of an operator client; detecting a gaze position of an operator viewing the display; determining a window, or a position within a window, from among the one or more windows views corresponding to the gaze position; and updating the display of the one or more camera views based on the gaze position.

## Description

### TECHNICAL FIELD

The present invention relates to a video surveillance method, a computer program, a video surveillance device and a video surveillance system.

### BACKGROUND OF THE INVENTION

A video surveillance management system typically receives video data from a plurality of surveillance cameras. The video surveillance management system may store the data in a recording server and carry out image processing or analytics, and transmit the video data to an operator device which may be a mobile device or an operator console including a display where it is viewed by an operator. The video surveillance management system may also carry out control relating to the storage and deletion of the video data.

The video surveillance management system may also receive commands from the operator and/or from the operator device. The commands may include commands to the video management system which control which data is sent to the operator device for display. For example, the operator can control which camera's data is sent from the video management system to the display so that the operator can select which camera to view data from.

Typically the operator's display displays data from a number of video cameras at any one time. Video data from multiple cameras can be displayed simultaneously in multiple windows or screens of an interface. Video from a selected camera can be displayed in a larger window than the other cameras, so that a camera can be prioritised. The larger window may be positioned closer to the operator than the other windows.

Video surveillance is often carried out in real time, with an operator monitoring events as they happen. Operators often need to re-prioritize camera views in real time, where every second counts, based on the nature of the observed incident. Such a case is when the operator wishes to follow the movement of a person as they move into and out of view of a number of cameras. With unexpected changes in activity levels, and fast movements of people within a building and/or between cameras, it may be challenging for an operator to keep their eyes on a target. For example, a small camera subview that has increased activity, or a sudden influx of people in a distant camera view, requires more attention from the operator than usual. In addition, operators may wish to adjust the displayed resolution of camera views to reduce the hardware resources required, so that the system becomes more responsive. The operators may alternatively wish to increase the size of a camera view in order better follow and understand the content being displayed.

Manual adjustments to re-prioritize camera views in real time are challenging for an operator. The manual adjustments can be slow and tedious and result in errors that may cause the loss in tracking of the targeted object or person.

### SUMMARY OF THE INVENTION

According to a first aspect of the present invention there is provided a video surveillance method as set out in claims 1 to 9.

According to a second aspect of the present invention there is provided a computer program as set out in claim 10.

According to a third aspect of the present invention there is provided a video surveillance device as set out in claims 11 to 13.

According to a fourth aspect of the present invention there is provided a video surveillance system as set out in claims 14 and 15.

According to the invention, a camera view the operator is looking towards may be automatically prioritised, or objects within a camera view may be prioritised. Alternatively, camera views that the operator is not looking towards may be prioritised. This allows the operator to more clearly understand and track objects within camera views without having to think and worry about proving instructions to the system. The operator can spend more time simply reviewing the camera images.

At least parts of the methods according to the invention may be computer implemented. Accordingly, the present invention may take the form of an entirely hardware embodiment, an entirely software embodiment (including firmware, resident software, micro-code, etc.) or an embodiment combining software and hardware aspects that may all generally be referred to herein as a "circuit", "module" or "system". Furthermore, the present invention may take the form of a computer program product embodied in any tangible medium of expression having computer usable program code embodied in the medium.

Since the present invention can be implemented in software, the present invention can be embodied as computer readable code for provision to a programmable apparatus on any suitable carrier medium. A tangible carrier medium may comprise a storage medium such as a hard disk drive, a magnetic tape device or a solid-state memory device and the like. A transient carrier medium may include a signal such as an electrical signal, an electronic signal, an optical signal, an acoustic signal, a magnetic signal or an electromagnetic signal, e.g. a microwave or RF signal.

### BRIED DESCRIPTION OF THE DRAWINGS

Embodiments of the present invention will now be described, by way of example only, with reference to the accompanying figures.
Figure 1 illustrates an example of a video surveillance system.
Figure 2 is a view of an operator display.
Figure 3 is a view of an operator display with an eye tracking device.
Figures 4A, 4B and 4C show examples of re-prioritising camera views displayed on the operator display.
Figure 5 shows an example of changing the displayed resolution of camera views displayed on the operator display.
Figure 6 shows an example of moving a camera view into the typical gaze position of an operator.
Figure 7 shows an example of highlighting a camera view displayed on the operator display.
Figures 8A and 8B show an example of highlighting a person within a camera view displayed on the operator display.
Figure 9 shows an example of highlighting certain people within a camera view displayed on the operator display.
Figures 10A, 10B and 10C show an example of updating camera views based on an operator's gaze position on a map view.
Figure 11 is a flowchart illustrating a video surveillance method.

### DESCRIPTION OF THE EMBODIMENTS

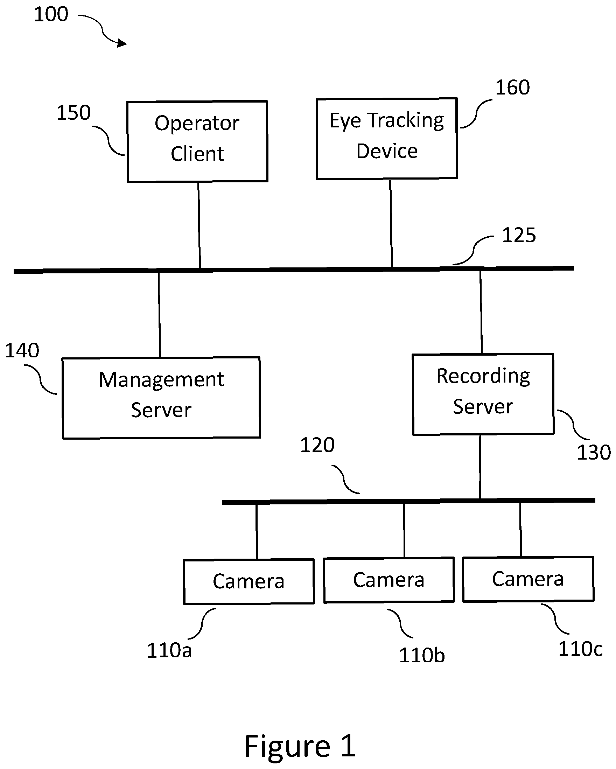

Figure 1 shows an example of a video surveillance management system 100 in which embodiments of the invention can be implemented. The system 100 comprises a management server 140 and a recording server 130. Further servers may also be included, such as further recording servers, archive servers or analytics servers. A plurality of video surveillance cameras 110a, 110b, 110c send video data to the recording server 130. An operator client 150 provides an interface via which an operator can view video data live from the cameras 110a, 110b, 110c, or recorded video data from one or more video streams from the recording server 130. An eye tracking device 160 is provided to track the movement of the eyes of an operator.

The cameras 110a, 110b, 110c capture image data and send this to the recording server 130 as a plurality of video data streams. The recording server 130 stores the video data streams captured by the video cameras 110a, 110b, 110c.

The management server 140 includes management software for managing information regarding the configuration of the surveillance/monitoring system 100 such as conditions for alarms, details of attached peripheral devices (hardware), which data streams are recorded in which recording server, etc.. The management server 140 also manages user information such as operator permissions. When an operator client 150 is connected to the system, or a user logs in, the management server 140 determines if the user is authorised to view video data. The management server 140 also initiates an initialisation or set-up procedure during which the management server 140 sends configuration data to the operator client 150. The configuration data defines the cameras in the system, and which recording server (if there are multiple recording servers) each camera is connected to. The operator client 150 then stores the configuration data in a cache. The configuration data comprises the information necessary for the operator client 150 to identify cameras and obtain data from cameras and/or recording servers.

The operator client 150 is provided for use by a security guard or other operator in order to monitor or review the outputs of the cameras 110a, 110b, 110c. The operator client 150 may be a fixed console or could be a mobile device connected to the video management system via a network. The operator client 150 includes an operator display which displays the images from the cameras and can display an interface for interacting with the management software on the management server 140. The operator client 150 may include a so called "smart wall" that displays a large number of video images on a wall, with one or more smaller monitors located nearer to the operator. The operator client 150 can display video data streams from one or more of the cameras 110a, 110b, 110c to view video in real time, or the operator client 150 can display recorded video data stored in the recording server 130.

Other servers may also be present in the system 100. For example, an archiving server (not illustrated) may be provided for archiving older data stored in the recording server 130 which does not need to be immediately accessible from the recording server 130, but which it is not desired to be deleted permanently. A fail-over recording server (not illustrated) may be provided in case a main recording server fails. Also, a mobile server (not illustrated) may be provided to allow access to the surveillance/monitoring system from mobile devices, such as a mobile phone hosting a mobile client or a laptop accessing the system from a browser using a web client. An analytics server can also run analytics software for image analysis, for example motion or object detection, facial recognition, event detection.

The operator client 150 is configured to communicate via a first network/bus 125 with the management server 140 and the recording server 130 and the cameras 110a, 110b, 110c. The recording server 130 communicates with the cameras 110a, 110b, 110c via a second network/bus 120.

The eye tracking device 160 is configured to communicate with the operator client 150 via the first network/bus 125. Alternatively, the eye tracking device 160 may be configured to communicate directly with the operator client 150 (not shown).

The cameras 110a, 110b and 110c may be set up to monitor a scene of interest such as a gaming table in a casino, or a security scanning area in a building (such as an airport), or a valuable object in a shop or museum. Each camera views a scene from a different angle, or each of the cameras may be positioned in different areas of a building or location. The embodiments are suitable for any location that is wished to be monitored and the embodiments are not limited to the locations and views described. Three cameras 110a, 110b and 110c are shown in figure 1, but any number of desired cameras can be provided.

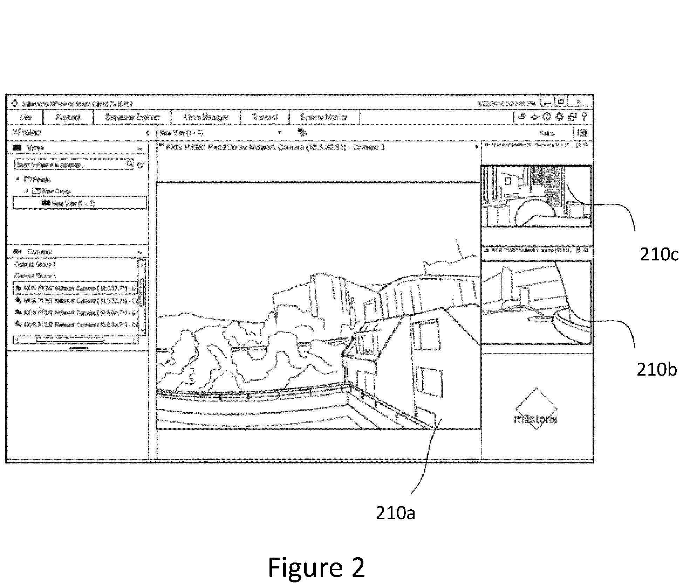

The operator client 150 may be arranged to show the video image being captured by only one of the cameras 110a, 110b, 110c as a selected video image on its display. In this case, only one video data stream is sent to the operator client 150, this being the stream from the selected camera. However, typically the operator client 150 is configured to display a plurality of camera images in different windows, where one particular camera image may be displayed in a larger size. Figure 2 shows an example of a display in which the video being captured by one of the video cameras as a selected image is displayed in a main window 210a, with video images captured by other cameras being displayed in smaller windows 210b, 210c. In this case, multiple streams are sent to the operator client 150. In the case of a system with a large number of cameras, even a display such as that of Figure 2 may not be able to show the video from all of the cameras, only a selection. In this case the video from the remaining cameras may be displayed on a smart wall and/or a combination of multiple monitors with multiple windows.

The present invention is applicable to the situation where an operator is viewing the display of the operator client 150 to monitor a scene in real time (rather than viewing stored video data). In certain circumstances it may be crucial that the operator maintains a clear view of the scene continuously. It may happen that something changes in the scene to obscure the operator's view from the currently selected camera. For example, in the case of monitoring a card table in a casino, a person may walk in front of a particular player. Or a camera may malfunction or be deliberately obscured. In this instance, the operator may wish to switch the selected camera to another camera which includes the same scene in its field of view quickly, so that they can continuously view the scene. In another scenario, a user may wish to track the progress of a person across multiple camera views as the person moves around a building or location, and so it is important that the camera views are switched so that the operator can accurately track the movement of the person. The present invention is also applicable to the case where an operator is viewing recorded video streams, such as for a "forensic investigation". In this case a plurality of video streams may be played back to the operator and it is important that camera views are switched, or the operator's attention is brought to specific views, similarly as described above.

Instead of a user manually selecting a camera view to prioritise and providing an instruction to change view to the operator client 150, the embodiments described allow the automatic update of the displayed cameras views based on an operator's gaze. In the present specification, gaze and gaze position are used synonymously. The gaze position is where an operator is looking on a screen/monitor and is measured as X,Y coordinates by the eye tracking device 160.

The automatic update of the display includes the automatic prioritisation of camera views, or the enhancement/prioritization of objects within a camera view. The operator client 150 based on information provided by the eye tracking device 160 can make this automatic determination and provide the operator with the prioritised and/or enhanced camera views. This means that the operator does not need to worry about providing instructions to the operator client 150 and the operator can concentrate on viewing the camera views.

The eye tracking device 160 is used to detect the gaze position of an operator on a particular screen/monitor or camera view. Based on the detected operator's gaze position, where a plurality of camera views (or windows) is displayed on one screen of the operator client 150, it is possible to detect which of the plurality of camera views or windows the operator is currently looking towards. The combination of the eye tracking device 160 and operator client 150 may not simply detect the current camera view the operator is gazing at, but may also record the gaze position of the operator over a certain time period.

By knowing the operator's gaze position it is possible to control an operator's interactions with the camera views. The operator is assisted in real time by updating and automatically adjusting the displayed position of camera views and/or providing other enhancements to the camera views of the operator.

The eye tracking device 160 can be any commercially available eye tracking device that is able to detect the gaze position of an operator. The eye tracking device 160 may include a camera with an infrared light source, and by measuring the infrared light reflected spots position relative to the pupil centre the operator's eye can be tracked. However, the eye tracking device 160 is not limited to a camera and an infrared light source. Any device that is suitable for detecting the operator's eye/gaze position, and that can relay the gaze position information to the operator client 150, may be used.

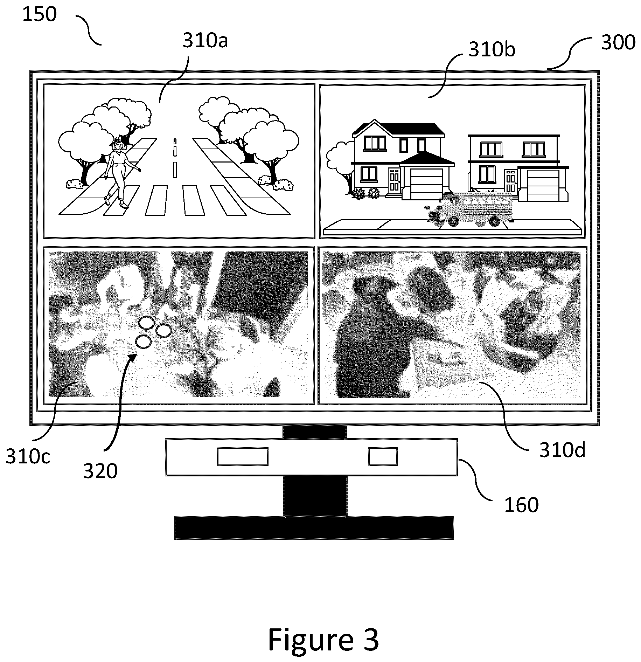

The eye tracking device 160 is mounted in front of an operator so as to be able to detect the operator's gaze position. The eye tracking device 160 may be positioned on a monitor part of the operator client 150 so that the eye tracking device 160 is facing the operator. Figure 3 shows an example arrangement where the operator client 150 includes a monitor 300 that is displaying four different camera images (or feeds) in four windows 310a, 310b, 310c, and 310d simultaneously. The eye tracking device 160 is mounted along the bottom of the monitor 300 facing the operator. The eye tracking device 160 may instead be mounted at the top of the monitor 300 or may be located on the left-hand or right-hand side of the monitor 300.

The position or location of the eye tracking device 160 is not critical. What is important is that the eye tracking device 160 is able to accurately detect the gaze potion of the user, and is calibrated for the user using the system. In an alternative arrangement, the eye tracking device 160 may be mounted separately from the operator client 150 or monitor 300. In another alternative arrangement the eye tracking device 160 may be provided on a headset worn by the operator, such as "eye tracking" glasses. This latter arrangement could be used where the operator client 150 is a mobile device mounted on a Virtual Reality (VR) headset and the operator is viewing the camera views in a "virtual world".

In figure 3, the eye tracking device 160 has detected the operator's gaze position as coordinates 320 (indicated as circles) on the monitor. As shown, the detected coordinates 320 are located on window 310c and so this means that the operator is looking toward, or gazing at, the camera view displayed in window 310c on the bottom left-hand side of monitor 300.

In the present specification the detected coordinates (X, Y coordinates) of the operator's gaze position are indicated using circles in the figures. However, it should be noted that these circles and indicated coordinate position are indicated on the figures for understanding purposes. The circles and detected gaze coordinates are not displayed to the operator.

Typically the eye tracking device 160 continually measures the gaze position of the operator in real time as the operator is viewing one or more camera views, and sends the measured gaze position (X, Y coordinates) to the operator client 150 via the first network/bus 125 (or it may be sent directly to the operator client 150). Alternatively, the eye tracker device 160 may be configured to measure the gaze position of a user at periodic intervals.

As discussed above, the gaze position measured by the eye tracking device 160 is measured as a X,Y coordinate. The boundaries of the X,Y coordinate system used by the eye tracking device 160, and the operator client 150, is set in advance, typically at the design and installation stage, and stored in a memory included in the operator client 150 and/or eye tracking device 160. The X, Y coordinates will depend on the screen resolution being used and again should be set at the design and/or installation stage.

The boundaries of the X,Y coordinate system typically correspond to the screen size of a monitor of the operator display. In another arrangement the boundaries of the X,Y coordinate system can be set to correspond to the limits of the windows and/or camera views displayed on the operator display. For example, in figure 3 the zero point of the X,Y coordinate system is set as the bottom left of window 310c and the maximum value of the X,Y coordinate system is set at the top right of window 310b.

In the case where a smart wall is provided together with monitors as the operator display, the X,Y coordinate system is set to cover the whole display zone provided by the operator display. As long as a coordinate system is set between the operator client 150 and eye tracking device 160 it will allow the operator client 150 to determine from the gaze position coordinates provided by the eye tracking device 160, which window and/or camera view, or part of a window/camera view, the operator is gazing towards.

The coordinate system is determined, and its limits set at the installation of the system. Calibration between the eye tracking device 160 and operator client 150 is necessary on initial installation of the system with the calibration data being stored in a memory included in the operator client 150. If additional monitors or displays are provided to the operator client 150 after installation, the coordinate system and its calibration needs to be updated.

Calibration will also depend on the resolution of the monitor of the operator client 150 and will need updating if the display resolution is changed. Furthermore, calibration for each operator that uses the video surveillance management system 100 is required. Each time an operator moves away from the video surveillance management system 100 a re-calibration procedure may be required. To account for movements of the operator while using the video surveillance management system 100, and to maintain eye tracking accuracy, re-calibration may be scheduled to take place at predetermined intervals, for example every one or two hours. Although an X,Y coordinate system is described, other suitable coordinate systems may be employed.

The operator client 150 receives camera images (or feeds) from a plurality of cameras and can display each of the camera images simultaneously as a plurality of camera views on the operator display. The operator client 150 stores information that defines the boundary positions of each of the camera views displayed on the operator display in the X,Y coordinate system. For example, in figure 3 the operator client 150 stores in a memory the zero point and maximum X,Y point for each of the windows 310a, 310b, 310c and 310d. This information is typically set during the design stage and installation of the system, and provision is provided for this to be added at a later stage if the operator display is changed (such as the addition, removal or repositioning of monitors) at a later date.

Once the operator client 150 receives the operator gaze position coordinates from the eye tracking device 160, the operator client 150 compares the gaze position coordinates with the stored coordinate information of the operator display. By making such a comparison the operator client 150 is able to determine which window/camera view, or part of a window/camera view, the operator is gazing towards. For example, in figure 3 the operator client determines that the gaze coordinates 320 are located withing the coordinates set for the bottom left-hand side window 310c, and so determines that the operator is gazing towards the camera view displayed in window 310c.

Based on the detected camera view the operator is gazing at, the operator client 150 can automatically adjust the position of the camera views displayed on the operator display, and/or provide enhancements to the displayed camera views, to help the operator keep track, or provide further understanding, of objects within the camera views.

In the present specification the concept of adjacent camera views is used. In this context, "adjacent" may refer to adjacent camera views (or windows) on a monitor or screen, or it may refer to adjacent cameras in a physical location. It may refer to both. For example, the images from cameras that are located adjacent to each other in a physical location may be displayed adjacent to each other on a screen/monitor. In addition, the same approach can be extended to the case of multiple monitors showing multiple video images.

Specific embodiments will be discussed below of updating the displayed camera views that allow the prioritization of certain camera views or the enhancement of features within a camera view.

### First Embodiment

In this embodiment camera views are updated by being reprioritised based on the operator's gaze position. The camera view in which the operator's gaze is fixed is given a higher priority than other camera views. This may mean that the camera view that the operator is gazing towards, and adjacent camera views, are made more visible to the operator by being highlighted in a larger view on a monitor, or a smart wall. Such an approach helps an operator avoid manual adjustments during real time viewing of a plurality of camera views, meaning they can spend their time viewing the images rather than making adjustments.

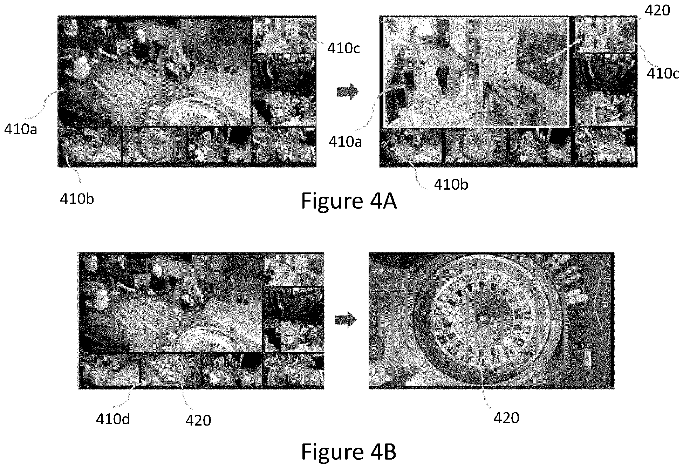

Figure 4A show one way the re-prioritisation of camera views can be handled when the operator client 150 includes a single monitor. In figure 4A, the monitor displays multiple camera views in multiple windows. In figure 4A the currently prioritised camera view is displayed in prioritised window 410a, while seven camera views are displayed below and to the right of prioritised window 410a as smaller windows 410b and 410c (note only windows 410b and 410c are labelled in figure 4A for simplicity of understanding). As can be seen, the prioritised window 410a is displayed larger than windows 410b and 410c.

The arrangement in figure 4A is not limiting, for example the prioritised window 410a may be located on the right-hand side of the monitor or it may be placed in the middle of the monitor screen with the other (smaller) windows surrounding it. Any arrangement where the prioritised window 410a is displayed larger than the other windows is suitable.

As can be seen on the left-hand side of figure 4A, the camera view shown in prioritised window 410a is the same as the camera view shown in figure 410b. In other words, the camera view shown in figure 410b is being simultaneously displayed (or duplicated) in prioritised window 410a and window 410b. This allows an operator to more easily view and scrutinise camera view shown in window 410b.

When an operator's gaze moves from the prioritised window 410a to another of the windows to view a different camera view (i.e. that is not currently being displayed in prioritised window 410a), the eye tracking device 160 detects the gaze position of the operator and provides the gaze position coordinates to the operator client 150. The operator client 150, having received the gaze position coordinates determines which window of the monitor the operator is gazing at and switches the camera view shown in the prioritised window 410a to the camera view of the detected window.

As shown on the right-hand side of figure 4A, coordinates 420 show the position where the eye tracking device 160 has detected the operator is currently gazing. Coordinates 420 indicate that the operator is gazing at the camera view displayed in window 410c. As result, the operator client 150 has switched the camera view shown in the in prioritised window 410a to display the same camera view that is shown in window 410c. In other words, now the camera view shown in window 410c is simultaneously displayed in the prioritised window 410a and window 410c.

In this manner, as the operator's gaze moves from the prioritised window 410a to one of the other windows, the view shown in the prioritised window 410a is automatically switched, or updated, to display the same camera view that the window the operator is gazing at is displaying. As such, the operator can simply and easily switch the camera view shown in the prioritised window 410a by simply gazing at a camera view shown in the smaller (non-prioritised) windows.

Figure 4B shows an alternative arrangement. In this arrangement, the camera views are updated by being switched from a multi-view setup to a single view setup. The view on the left-hand side of figure 4B is similar to that shown on the left-hand side of figure 4A in which multiple camera views are displayed in a number of windows with one of the windows displayed larger than the others.

On the left-hand side of figure 4B, coordinates 420 show the position where the eye tracking device 160 has detected the operator is currently gazing. Coordinates 420 indicate that the operator is gazing at the camera view displayed in window 410d. In this alternative arrangement, once the operator client 150 has determined that the operator is gazing at one of the smaller windows, the view of the whole monitor is switched to the detected camera view. This is shown on the right-hand side of figure 4B where the camera view that was displayed in window 410d is now displayed on the whole of the monitor. In other words, the camera view that the operator is currently gazing at is enlarged and brought forth, covering the whole window or monitor. Such an approach further helps the operator securitize a desired camera view. The enlarged view shown on the right-hand side of figure 4B may be displayed until the operator provides an instruction to the operator client 150 to revert back to the view shown on the left-hand side of figure 4B. Alternatively, the enlarged view may be displayed for a certain time period before being reverted back to the view shown on the left-hand side of figure 4B.

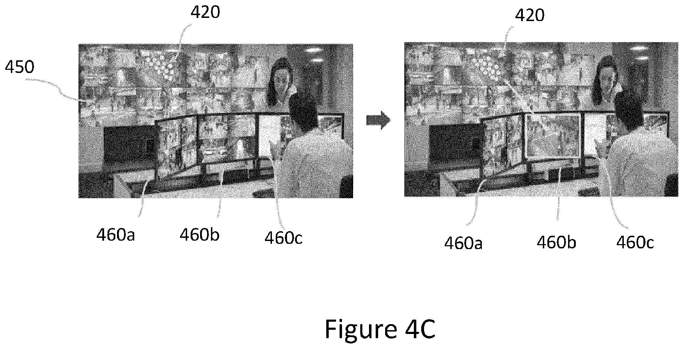

Figure 4C shows a further alternative where the re-prioritisation of camera views can be handled between multiple monitors. In figure 4C multiple camera views are shown in a number of windows on a smart wall 450, and also multiple camera views are shown on a number of windows on three monitors 460a, 460b, and 460c. Three monitors are shown in figure 4C, but the embodiment is not limited to this. Any suitable number of monitors may be provided. The monitors 460a, 460b and 460c are located closer to the operator than the smart wall 450. Although not shown in figure 4C, this arrangement is particularly suitable for the case where the eye tracking device 160 is provided on a headset worn by the operator (such as "eye tracking" glasses), or the operator is wearing a Virtual Reality (VR) headset.

On the left-hand side of figure 4C the middle monitor 460b is displaying four camera views in four windows. Coordinates 420 show the position where the eye tracking device 160 has detected the operator is currently gazing. Coordinates 420 indicate that the operator is gazing at one of the video views displayed in a window on the smart wall.

The right-hand side of figure 4C shows that the view shown on the middle monitor 460b has been switched to display the camera view that the operator is gazing at on the smart wall. The switching in figure 4C is similar to that shown in figure 4b in that the detected camera view that the operator is gazing at is enlarged and brought forth, covering the whole window of the middle monitor 460b. The middle monitor 460b is located closer to the operator than the smart wall, and so by moving and enlarging the displayed camera view on the smart wall to the middle monitor allows even greater scrutiny of the desired camera view by the operator. Figure 4C shows the case where a smart wall and a plurality of monitors are provided, but the same idea of moving and enlarging a desired camera view onto a particular monitor or windows can be applied to cases where just a plurality of monitors is provided. Similarly as for the arrangement shown in figure 4B, the displayed views may revert back to that shown on the left-hand side of figure 4C based on an operator command or after a certain time period expires.

In this described embodiment, the eye tracking device 160 is used with the operator client 150 to detect which camera view an operator is gazing at, and if the detected camera view is not currently the prioritised view (i.e. a view that is displayed larger than the others) the prioritised view is switched to the detected view. For example, the prioritised view is displayed larger than the other views. This means that the operator as they move their gaze to a desired camera view, that camera view is automatically then displayed at a larger size without the operator having to provide any instruction or input to the operator client 150. This means the operator can provide their full attention to viewing the camera views. In an alternative arrangement, instead of the camera view being automatically switched the operator could receive a prompt that it would be desirable to change the camera view, and the operator would need to confirm the change.

### Second Embodiment

In this embodiment, the displayed resolution of camera views is upscaled and/or downscaled depending on which camera view the operator is gazing towards. The upscaling/downscaling of the camera views may be considered as another type of updating by prioritisation of the camera views.

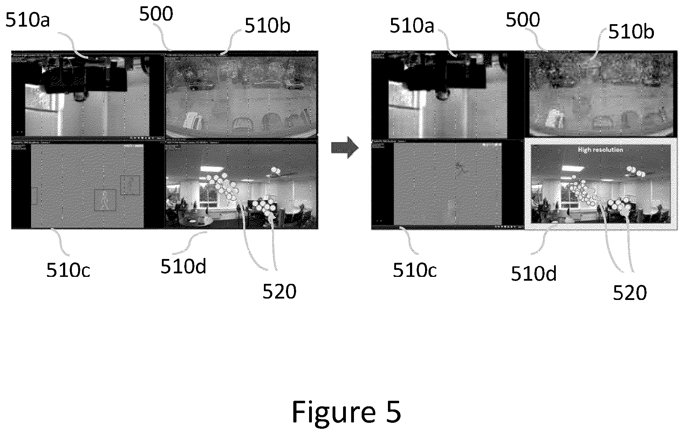

Figure 5 shows a monitor 500 of the operator client 150 is displaying four video views in four windows 510a to 510d. On the left-hand side of figure 5 all four windows 510a to 510d are displaying their respective camera views with the highest possible resolution.

Coordinates 520 in figure 5 show the position where the eye tracking device 160 has detected the operator is currently gazing. Coordinates 520 indicate that the operator is gazing at the lower right-hand window 510d, and so the operator client 150 determines that the operator is gazing at window 510d.

The right-hand side of figure 5 shows that the resolution of the windows the operator is not currently gazing at (windows 510a, 510b and 510c) have been downscaled, or reduced, in displayed resolution, while the displayed resolution of window 710d remains at its highest display resolution.

As an alternative the above, all of the video views may initially be displayed with a low resolution and once it is determined the operator is gazing at one of the camera views, that camera view is upscaled, or increased, in resolution to the highest possible display resolution.

This embodiment helps to reduce hardware requirements of the system and enables a smoother operation of the applications in use. Because the camera view the operator is gazing towards is prioritized and displayed at the highest resolution the operator can continue to scrutinise a desired video image to the fullest, while reducing the hardware requirements. It should be understood in this arrangement that it is the displayed resolution of the camera view that is changed, thus reducing the operating requirements of the monitor. The captured and/or recording resolution from the cameras does not change.

### Third Embodiment

In this embodiment, the updating of the display includes adjusting the position of the camera views in real time based on the operator's detected gaze behaviour. The operator's gaze behaviour may be defined as how the operator's gaze positions are commonly distributed amongst the monitors and windows in front of the operator by habit and/or by personal preference. In this embodiment, based on the operator's gaze behaviour a camera view may be prioritised by moving the camera view into the area corresponding to the operator's typical gaze position.

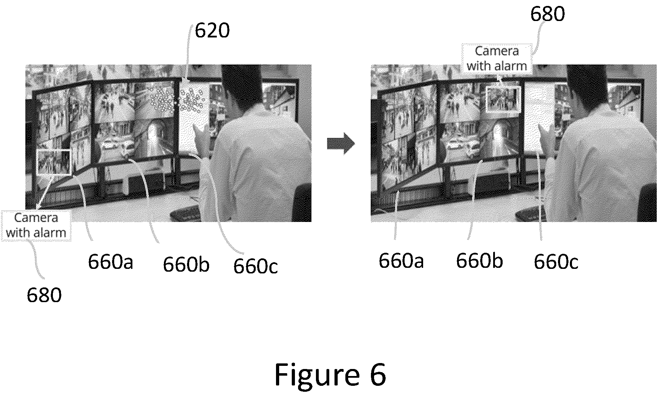

Figure 6 shows an operator viewing three monitors 660a, 660b, 660c each displaying a plurality of camera views in a number of windows.

Coordinates 620 in figure 6 show the positions where the eye tracking device 160 has detected the operator is typically gazing. Coordinates 620 indicate that the operator typically gazes at the top right of the middle monitor 660b and the top left of the right-hand monitor 660c. Based on the gaze position coordinates provided to the operator client 150 by the eye tracking device 160 the operator client 150 can determine that, over a certain time period, the operator has developed a habit of gazing at the top right of middle monitor 660b and the top left of the right-hand monitor 660c. By determining the operator's typical gaze position over time allows the operator client 150, receiving the coordinates 620 from the eye tracker, to determine a particular operator's gaze behaviour. In other words, the operator client 150 may determine the monitors and/or windows the operator looks at most.

As discussed above, the operator's gaze behaviour may be determined based on a number of measured gaze positions over sone predetermined time. The operator's gaze behaviour may be continuously measured and updated while the operator is viewing the video views. Alternatively, the operator may manually select monitors and/or windows that the operator wishes to designate as their typical gaze position. For example the operator may prefer to view monitors and/or windows that are closest to the operator. The method of determining the operators gaze behaviour is not limiting, and any suitable method may be used to determine an operator's gaze behaviour.

As shown on the left-hand side of figure 6, a camera view that is displayed on the left-hand monitor 660a has an alarm 680. The alarm 680 means that it is important for the operator to view this camera view, but currently it is displayed outside of the operator's typical gaze position and so the operator may not notice the alarm, or at least there may be a delay until the operator does notice the alarm.

The right-hand side of figure 6 shows that the camera view with the alarm 680 has been switched to the top right of the middle monitor 660b. Thus, the camera view with the alarm 680 has been moved close to the operators usual, or typical, gaze position based on the operator's measured gaze behaviour.

Thus, in this embodiment when a camera view that requires the attention of the operator, such as when there is an alarm, the camera view is prioritized and is moved close to the position where the operator typically gazes. This can optimize the operator's workflow as it enables the operator to react fast and accurately based on any alarm. It also means that the changes of the operator missing a camera view with an alarm is minimised.

### Fourth Embodiment

In this embodiment, the update of the display may alert the operator to any missed events and/or provide other notifications to the operator. In other words, in this embodiment the camera view that the operator is not gazing at may be prioritized.

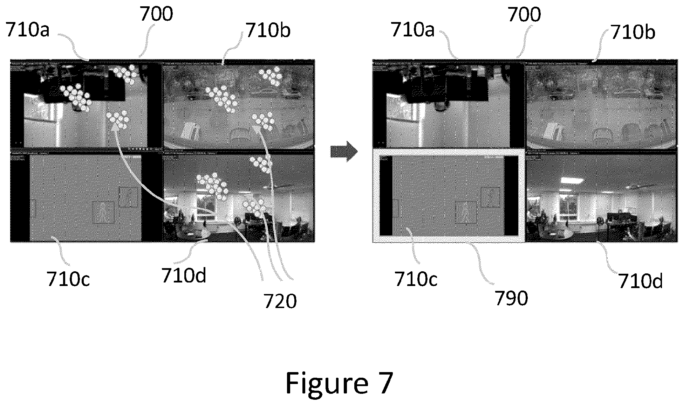

Figure 7 shows the monitor 700 of the operator client 150 displaying four camera views in four windows 710a to 710d.

On the left-hand side of figure 7 coordinates 720 show the position where the eye tracking device 160 has detected the operator has gazed. Coordinates 720 indicate that the operator has gazed at the camera views in windows 710a, 710b and 710d, but has not gazed at the camera view in window 710c. Thus, the operator client 150, based on the coordinate information provided by the eye detecting means 160, determines that the operator has gazed at windows 710a, 710b and 710d but not window 710c on the bottom left-hand side of monitor 700.

On the right-hand side of figure 7 the bottom left-hand side window 710c has been highlighted with box 790. This is because an event occurred in the camera view shown in window 710c, such as a person passing through a door without authorization, and because the operator client 150 determined that the operator had not gazed at window 710c it determined that the operator may have missed this event. Thus, the operator's attention is drawn to the camera view 710c with the highlight box 790, or in other words the camera view in window 710c is prioritised by including the highlight box 790. Alternatively, some other form of alarm may be given to the operator to draw their attention to window 710c.

Often an operator is aware of multiple events in a video surveillance system, amongst those is looking at camera views, observing access control systems, motion detection on cameras, or other alarms. Such a number of events to keep track of can sometimes cause the operator to unintentionally miss some of the events. In this embodiment, by using the gaze information from the eye tracking device 160 it can be determined which camera views and/or events the operator has gazed on and those that the operator may have missed. Any events or camera views that the operator has not gazed at can be clearly brought to the operator's attention to review. Thus, this embodiment can alert the operator to any potentially missed events.

An alternative to the above-described arrangement is where the operator may not be in close proximity to the monitors 710a to 710d. The operator client 150 using the data from the eye tracking device 160 would determine the operator is not gazing at any of the camera views or monitors. If an event was detected in one of the camera views that required the attention of the operator, then the operator could be altered to this my other means. For example, the operator client 150 could send a text message to the operator's phone informing them to return to their desk and follow up on camera views and adjacent camera views, or simply to notify them of an event that requires their attention. Even if the operator is at their desk, the operator client 150 may alert the operator to look at another camera view because an event of interest has been detected in the other camera view.

Another alternative in this embodiment is to keep track of how long an operator is viewing the camera views. Based on the information provided by the eye tracking device 160, the operator client 150 can detect how long an operator is actively looking that the camera views. If it is determined that the operator has spent too much time viewing the camera views, and is likely to be tired, the operator can be informed to take a break.

### Fifth Embodiment

In this embodiment, when the operator's gaze is fixed at one part of window displaying a camera view, the operator's gaze position is determined within the window/camera view and elements located in the camera view at the position where the operator is gazing are highlighted to increase their visibility and understanding to the operator. In this embodiment, the display update means that certain objects within a camera view are prioritised.

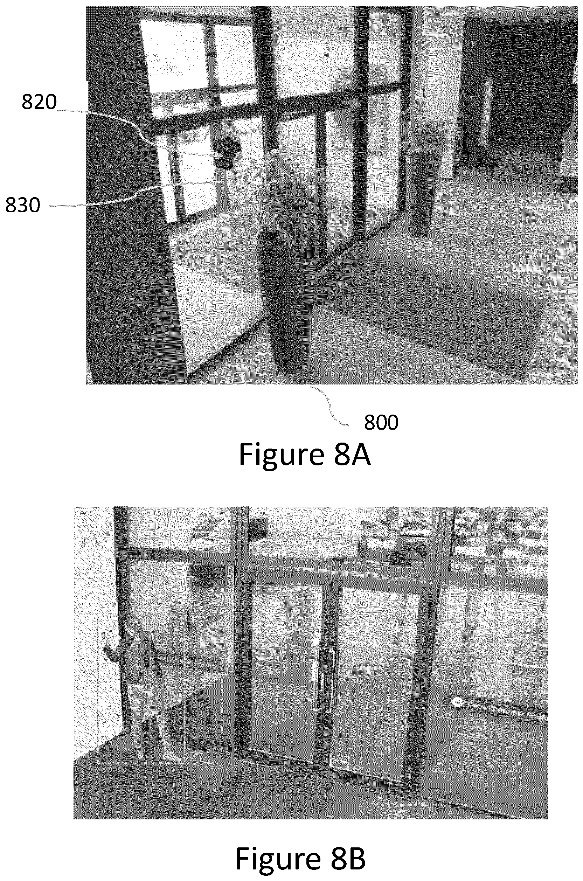

Figure 8A shows a camera view displayed in window 800 of the operator client 150. The camera view is that of the entrance to a building that includes glass entrance doors. This view is looking from within the building. Although, a single camera view is shown, this may be only one of a plurality of camera views displayed to the operator.

Coordinates 820 show the position where the eye tracking device 160 has detected the operator is currently gazing. Coordinates 820 indicate that the operator is gazing at a person outside of the glass entrance doors of the building.

Based on the gaze position detected by the eye tracking device 160, the operator client 150 preforms object detection within the camera view at the detected gaze position. In the present example, the operator client 150 detects a person at the position where the operator is gazing. The operator client 150 highlights the detected person by displaying a bounding box 830 on the camera view on the monitor 800.

A person is highlighted based on person detection and segmentation results using a known deep-learning model. An architecture like Mask R-CNN may be used to train a segmentation model specifically for people detector. Alternatively, a prompt-based model, such as Meta AI's SAM model, may be used. The prompt for SAM can be input points or bounding boxes. The method of detecting a person is not limited, any suitable method of detecting a person may be used.

In addition to person detection as described above, the gaze position of the operator within a camera view may be used for any kind of desired image enhancement algorithm, such as that discussed in European Patent Application publication number EP 4258204.

As in figure 8A it can be seen that it is difficult for the operator to observe the person's activity outside the glass door due to low contrast, and also that part of the person is obscured by other objects. Therefore, by highlighting, or prioritizing, the person with bounding box 830 it makes it easier for the operator to track the person in the camera view.

Computation is saved by highlighting only the people in the camera view that the operator's eyes are fixed on instead of all people that may be visible in a camera or all camera views.

Similarly, to the first embodiment, based on the eye tracking device 160 and operator client 150 detecting that the operator is gazing at a person in the camera view, the camera view may be prioritised. The operator client 150 may switch views on a monitor of the operator client 150 to provide the operator with a clearer view, or simply just another view, of the detected person. For example, in the case of the person located outside of the entrance of the building shown in figure 8A, the operator's view may be switched to that shown in figure 8B that shows a view from outside of the building. As can be seen in figure 8B, the person is displayed more clearly to the operator in this view, and so the operator is better able to tack the person and judge the situation.

This embodiment is not limited to only detecting people. Any objects in the camera view that fall within the operator's gaze can be detected and highlighted, or prioritized, to the operator. Detected objects can be displayed with bounding boxes or text, or other ways that would help the operator's understanding of the detected objection. If the position of the detected gaze is defined by a bounding box, all objects within the bounding box may be segmented. This will be useful if the operator does not know what type of objects they are expecting.

### Sixth Embodiment

In this embodiment, when the operator's gaze is fixed on a person, or persons, within a camera view, the operator's gaze position is determined within the camera view and the display is updated such that the person the operator is gazing at is highlighted, or prioritised, to increase their visibility and understanding to the operator.

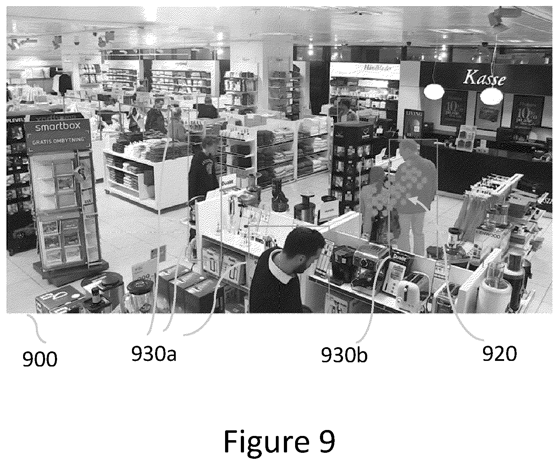

Figure 9 shows a camera view displayed in window 900 of the operator client 150. The camera view is that of shop that includes many objects and a plurality of people. As can be seen from figure 9 it can be challenging for the operator to observe human activity in such a cluttered camera view with many distractions.

In figure 9 people have been detected in the camera view by the operator client 150 and surrounded by bounding boxes 930a (only some of the boxes are labelled for understanding). The people can be detected using the known techniques discussed above in relation to the fifth embodiment.

Coordinates 920 in figure 9 show the position where the eye tracking device 160 has detected the operator is currently gazing. Coordinates 920 indicate that the operator is gazing at two people standing close to each other on the right-hand side of the camera view that is indicated by bounding box 930b. Thus, the operator client 150 determines that the operator is gazing at the people within bounding box 930b.

The operator client 150 highlights the people within bounding box 930b by segmentation. The remaining people in the camera view remain solely detected and indicated by bounding boxes 930a.

By highlighting and segmenting, or otherwise prioritizing, the people that the operator is currently gazing at helps the operator identify and track people or persons within a busy and cluttered camera view.

This embodiment may be applicable to a case where an operator wishes to follow the movement of a person, or persons, as they move into and out of view of a number of cameras, for example as a person moves throughout a building. In this case a plurality of cameras can be provided each having a physical relation to each other, such as described in US patent number US 11,594,114.

Although in this embodiment has been described in relation the detection of people, the embodiment is not limited to this. The embodiment applies equally when the operator is trying to keep track of any object within a cluttered view. For example, the system may detect cars or other vehicles in a busy street view.

### Seventh Embodiment

The embodiments above have described the case where the eye tracking device 160 detects the operator's gaze position while viewing camera views in windows of a monitor of the operator client 150. In this embodiment the eye tracking device 160 is used to detect the gaze position of an operator viewing a map view in a window of the operator client 150, and updating or prioritizing camera views on another display of the operator client 150 based on the detected gaze position.

Video surveillance systems have adopted the idea of using a map view that visualizes the topology of the video surveillance system and allows operators to interact with the cameras included in the system. This provides operators with an overview of where the cameras are located on the premises on a building or site. Such an overview helps the operators understanding of the physical relationship between the cameras.

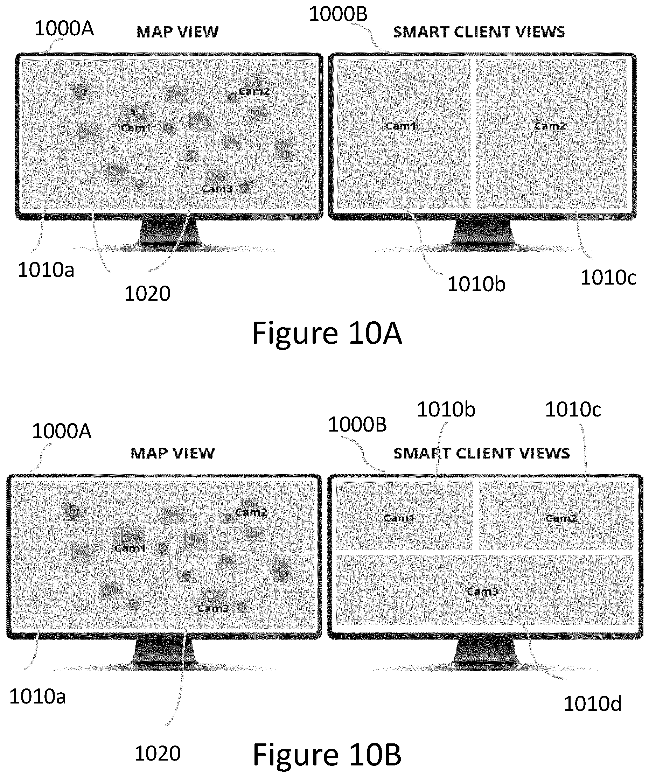

Figure 10A shows an operator client 150 with two monitors, a left-hand monitor 1000A and a right-hand monitor 1000B. The left-hand monitor 1000A is displaying a map view in a window 1010a. The map view shows the overall position of the various cameras included in the video surveillance system. As shown in figure 10A the camera positions are indicated with icons. It is not necessary that the cameras are indicated with icons, they could instead be indicated with text. The position of the camera icons on the map view corresponds to the actual physical location of the cameras. The right-hand monitor 1000B is displaying two camera views in windows 1010b and 1010c.

On the left-hand monitor 1000A coordinates 1020 show the position where the eye tracking device 160 has detected the operator has gazed. Coordinates 1020 indicate that the operator has gazed at the camera icons corresponding to cameras Cam1 and Cam2. As indicated by the right-hand monitor 1000B, the operator client 150, based on the coordinate information provided by the eye detecting means 160, has determined that the operator has gazed at camera icons Cam1 and Cam2 in window 1010a and has selected the video feed from cameras Cam1 and Cam2 for display on the right-hand monitor 1000B in windows 1010b and 1010c, respectively.

In figure 10B, the left-hand monitor 1000A shows that the eye tracking device 160 has determined that the operator's gaze position is now fixed on an icon corresponding to camera Cam3. As indicated by the right-hand monitor 1000B, the operator client 150, based on the coordinate information provided by the eye detecting means 160, has determined that the operator is now gazing at camera icon Cam3 in window 1010a and has added the video feed from cameras Cam3 for display on the right-hand monitor 1000B in window 1010d. Thus, based on the gaze position of the operator detected by the eye tracking device 160, the display on the right-hand monitor 1000B has been updated to display camera views from cameras Cam1, Cam2 and Cam3 in windows 1010b, 1010c and 1010d, respectively.

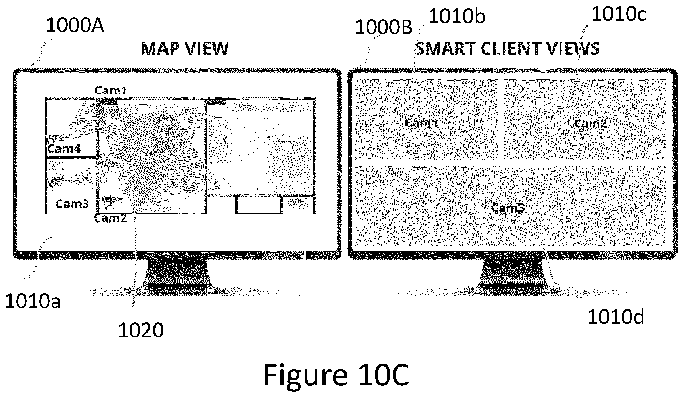

Figure 10C shows an alternative arrangement. In this arrangement the map view shown in window 1010a of monitor 1000A shows the position of cameras Cam1 to Cam4 within a building. The map view includes the position of the walls and doors of the building, or in other words displays the floorplan of the building. The map view in window 1010a also shows the field (or angle) of view of cameras Cam1 to Cam4 as triangles.

Coordinates 1020 on the left-hand monitor 1010 show the position where the eye tracking device 160 has detected the operator is gazing. As can be seen in figure 10C the coordinates 1020 do not correspond to an icon of a camera. It is likely that the operator wishes to view or track an object located at the position of coordinates 1020. It can also be seen that, based on the indicated camera field of views, at the position corresponding to coordinates 1020 no camera view is covering this position. Thus, the operator is looking at a position that may be called a "blind spot". In such a case as this, the operator client 150, based on the coordinate information provided by the eye detecting means 160, determines which cameras have a field of view that is closest to the gaze position, or in other words the cameras that will be able to display a view that is closest to the blind spot. As shown on the right-hand monitor 1000B the operator client 150 has determined that cameras Cam1, Cam2 and Cam3 are the cameras that have a field of view closest to the position where the operator is gazing, and has updated the display to display camera views from cameras Cam1, Cam2 and Cam3 in windows 1010b, 1010c and 1010d, respectively.

As described in this embodiment, the eye tracking device 160 can detect the gaze position of an operator viewing a map view on a first monitor, and based on the detected gaze position on the map view the operator client 150 update and/or prioritize the camera views displayed on a second monitor. Although, the use of a first and second monitor has been described, this embodiment is not limited to this. The map view may be displayed in one window of a single monitor that includes other windows displaying camera views. Alternatively, more than two monitors may be provided.

This embodiment allows an operator to easily and quickly change camera views based on their gaze position on a map view. The camera views are changed, or prioritised, without the operator having to drag and drop the different camera icons on the map view, or making any other type of selection of camera icons on the map view, and without the operator having to remove their attention from the map view until all the cameras they want to see are included in the camera views. Thus, the operator can spend more time concentrating on viewing the camera views instead of having to manually selects cameras from the map view.

The camera views may be changed depending on how long an operator gazes at a camera icon on the map view. For example, the camera view may only be changed if the operator gazes at a camera icon for a predetermined time.

Moreover, the camera views may switch back to a "preset" view after a predetermined time has expired from when the operator's gaze was detected on a camera icon. For example, in the case of the examples shown in figures 10A and 10B, the camera views shown on the right-hand monitor 1000B shown in figure 10B may "default" back to a "pre-set" view shown in figure 10A after a predetermined time.

This embodiment may also be applicable to a case where an operator is setting-up and/or reconfiguring a surveillance system. In this case, one monitor may have a preset arrangement of camera views, and the operator uses the map view to identify changes in the surveillance system that should be reflected in the preset view. Thus, operators are able to "automatically" reconfigure the preset views, reducing the time and effort required for maintaining the surveillance system.

### Eighth Embodiment

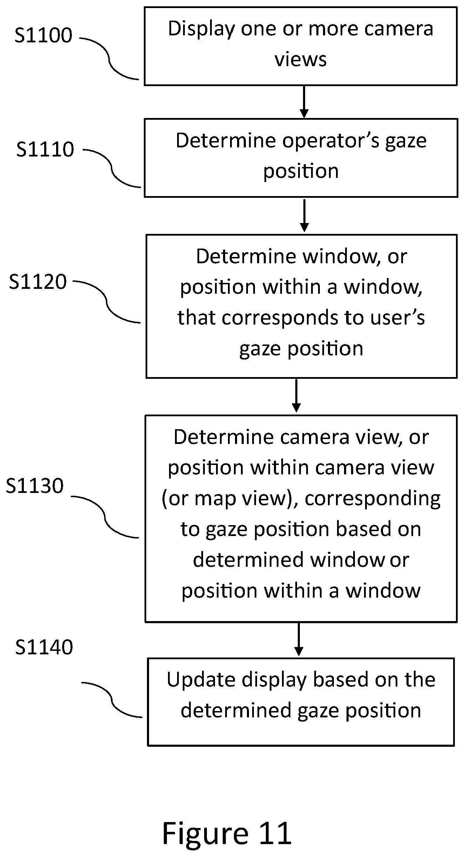

Figure 11 is a flowchart representing a video surveillance method.

In step S1100 the operator client 150 displays one or more camera views to the operator. A single camera view may be displayed to the operator as shown in figures 8A, 8B and 9, or if a plurality of camera views is displayed they may be displayed to the operator as shown in figures 2 to 7. The one or more camera views may be displayed in one or more windows on a monitor, or may be displayed in one or more windows on a smart screen and/or a plurality of monitors. The operator client 150 may also display a map view in one or more windows on the operator display, such as shown in figure 10A to 10C.

In step S1110 the eye tracking device 160 monitors the position of the operator's eye, or eye's, and determines the operator's gaze position. The eye tracking device 160 determines the operator's gaze position as X,Y coordinates, where the limit of the X,Y coordinate system corresponds to the area of the displayed one or more camera views (or map view). The eye tracking device 160 provides the gaze position coordinates to the operator client 150 via the first network/bus 125 (or it may provide the gaze position coordinates directly to the operator client 150).

In step S1120 the operator client 150 having received the operator's gaze position coordinates from the eye tracking device 160, uses the gaze position coordinates to determine which window, or position within a window, the operator is gazing towards.

As discussed previously, the operator client 150 stores coordinate information of its operator display and so knows the coordinate position of each of the windows that display a camera view or map view. Based on a comparison between the stored coordinate information and the gaze position coordinates determined in step S1110, the operator client 150 can determine which window, and thus camera view, or an area within a window, and thus an area within a camera view or map view, the operator is gazing towards.

In step S1130 the operator client 150 determines the camera view that corresponds to gaze position, or the position within a camera view or map view that corresponds to the gaze position, based on the detected window or detected position within the window. For example, the operator client 150 will know which camera view is being displayed in a window, and thus by determining the window the operator is gazing at, the operator client 150 can determine which camera view the operator is looking towards. In other words, the operator client 150 determines the camera view, or position within a camera view or map view, that corresponds to the determined window or position with a window.

In step S1140, based on the detected gaze position, the detected window, or position within a window, and the determined camera view, or position with a camera view or map view, the display of the camera views is updated by the operator client 150.

The update of the display includes the prioritisation of camera views that correspond to the detected gaze position, or the prioritization of camera views that do not correspond to the detected gaze position. The update of the display also includes the prioritisation of a position within a camera view that corresponds to the detected gaze position. In other words, the updating of the display includes, based on the determined camera view, or position within a camera view, that corresponds to the operator's gaze position, the operator client 150 prioritising and/or enhancing one or more camera views to help the operator. The update also includes the update of displayed camera views based on the operator's gaze position on a map view.

In the case where a plurality of camera views is displayed, the prioritisation and/or enhancement may be one as described in the first to fourth embodiments. For example, the prioritization may be the enlarged display of the detected camera view as discussed in the first embodiment and shown in figures 4A, 4B and 4C. Alternatively, the prioritisation may be the adjustment of the displayed resolution (e.g. increased resolution compared to the other camera views) of the camera view that the operator is gazing at as discussed in the second embodiment and as shown in figure 5. Another alternative prioritisation is the moving of a camera view, or the highlighting of a camera view, that is determined not to be within the typical gaze position of the operator or a camera view that the operator has not looked at, as described in the third and fourth embodiments as shown in figures 6 and 7.

In the case where a single camera view is being displayed, and the operator client 150 has detected the position within the camera view where the operator is gazing, the prioritization and/or enhancements provided to the operator are those as discussed in the fifth and sixth embodiments above in relation to figures 8A, 8B and 9. Thus, objects in the camera view that the operator is looking at may be prioritised or enhanced to help the operator's understanding and tacking of these objects. Although, it has been described in this case that a single camera view is being displayed, the embodiment is not limited to this. A plurality of camera views may be displayed, and the operator client 150 can detect the position within one of the plurality of camera views where the operator is gazing, and then provide the prioritization and/or enhancements to that one camera view.

In the case where the prioritisation and/or update of the display is made based on an operator's gaze position on a map view, the prioritisation and/or update may be any as described in the seventh embodiment.

In such manner, the above-described embodiments allow the operator to easily change a camera view to a prioritised camera view, or allow the operator to more clearly understand and track an object within a camera view. Because the update of the display to include prioritization and/or enhancements is made automatically without the operator having to provide inputs into the operator client 150, the operator only needs to concentrate on viewing the camera images. The operator can view and make judgements about what is happening in the camera views in a more efficient manner, and there is less chance of an operator missing any suspicious activity or missing an alarm.

Embodiments of the present invention include a video surveillance method where prioritisation includes moving the display of a camera view that does not correspond to the gaze position to a position close to the gaze position, and/or a method where the prioritisation includes highlighting a camera view that does not correspond to the gaze position. The embodiments also include a video surveillance device where the prioritising includes highlighting an object at the position within the camera view that corresponds to the gaze position, and/or where the operator client is configured to update the display to prioritise the display of a camera view that does not correspond to the gaze position.

Embodiments of the present invention can also be realized by a computer of a system or apparatus that reads out and executes computer executable instructions recorded on a storage medium (e.g., non-transitory computerreadable storage medium) to perform the functions of one or more of the above-described embodiment(s) of the present invention, and by a method performed by the computer of the system or apparatus by, for example, reading out and executing the computer executable instructions from the storage medium to perform the functions of one or more of the above-described embodiment(s). The computer may comprise one or more of a central processing unit (CPU), micro processing unit (MPU), or other circuitry, and may include a network of separate computers or separate computer processors. The computer executable instructions may be provided to the computer, for example, from a network or the storage medium. The storage medium may include, for example, one or more of a hard disk, a random-access memory (RAM), a read only memory (ROM), a storage of distributed computing systems, an optical disk (such as a compact disc (CD), digital versatile disc (DVD), or Blu-ray Disc (BD)^{™}), a flash memory device, a memory card, and the like.

While the present invention has been described with reference to embodiments, it is to be understood that the invention is not limited to the disclosed embodiments.

## Claims

1. A video surveillance method comprising:
displaying one or more camera views from one or more video cameras in one or more windows on a display of an operator client;
detecting a gaze position of an operator viewing the display;
determining a window, or a position within a window, from among the one or more windows corresponding to the gaze position; and
updating the display of the one or more camera views based on the gaze position.

2. A method according to claim 1, wherein the method further comprises determining a camera view, or a position within a camera view, from among the one or more camera views corresponding to the gaze position based on the determined window, or position within a window.

3. A method according to claim 2, wherein the updating includes prioritising the display of the camera view, or a position within a camera view, corresponding to the gaze position.

4. A method according to claim 3, wherein the prioritising includes displaying the camera view corresponding to the gaze position at a larger size than the remaining camera views.

5. A method according to claim 3, wherein the prioritising includes displaying the camera view corresponding to the gaze position at a position close to the operator.

6. A method according to claim 3, wherein the prioritising includes displaying the camera view corresponding to the gaze position at a higher resolution than the remaining camera views.

7. A method according to claim 3, wherein the prioritising includes highlighting an object at the position within the camera view that corresponds to the gaze position.

8. A method according to claim 2, wherein the updating includes prioritising the display of a camera view that does not correspond to the gaze position, and wherein the prioritisation includes moving the display of a camera view that does not correspond to the gaze position to a position close to the gaze position, or the prioritisation includes highlighting a camera view that does not correspond to the gaze position.

9. A method according to claim 1, wherein the method further comprises displaying a map view in a window on the display of the operator client, wherein:
the determining includes determining a position on the map view displayed in the window corresponding to the gaze position based on determined position within the window.

10. A computer program which, when executed by a programmable apparatus, causes the apparatus to perform the method of any one of Claims 1 to 9.

11. A video surveillance device comprising:
an operator client including a display configured to display one or more camera views in one or more windows from one or more video cameras; and
an eye tracking device configured to detect a gaze position of an operator viewing the display, and provide the detected gaze position to the operator client,
wherein the operator client is configured to:
determine a window, or a position within a window, from among the one or more windows that corresponds to the gaze position, and
update the display of the one or more camera views on the display based on the gaze position.

12. A video surveillance device according to claim 11, wherein the client device is further configured to determine a camera view, or a position within a camera view, from among the one or more camera views that corresponds to the gaze position based on the determined window, or position within a window.

13. A video surveillance device according to claim 12, wherein the operator client is configured to update the display to prioritise the display of the camera view, or a position within a camera view, corresponding to the gaze position.

14. A video surveillance system comprising:
a plurality of video cameras;
a recording server configured to receive a plurality of video data streams from the plurality of video cameras;
an operator client configured to receive, from the recording server, the plurality of video data streams and display the plurality of video data streams as a plurality of camera views in a plurality of windows on a display; and
an eye tracking device configured to detect a gaze position of an operator viewing the display, and provide the detected gaze position to the operator client;
wherein the operator client is configured to:
determine a window, or a position within a window, from among the plurality of windows corresponding to the gaze position, and
update the display of the plurality of camera views on the display based on the gaze position.

15. A video surveillance system according to claim 14, wherein the operator client is further configured to determine a camera view, or a position within a camera view, from among the one or more camera views that corresponds to the gaze position based on the determined window, or position within a window.
